(19) Europäisches Patentamt / European Patent Office / Office européen des brevets

(11) **EP 1 870 225 A1**

(12) **EUROPEAN PATENT APPLICATION**

(43) Date of publication:
**26.12.2007 Bulletin 2007/52**

(51) Int Cl.:
***B29C 49/00*** *(2006.01)*

(21) Application number: **06115771.5**

(22) Date of filing: **21.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **TOTAL PETROCHEMICALS RESEARCH FELUY**
**7181 Seneffe (Feluy) (BE)**

(72) Inventors:
- **Duranel, Laurent**
  **B-1400 Nivelles (BE)**
- **Humbeeck, Emmanuel**
  **B-7181 Feluy (BE)**
- **Radermacher, Fabienne**
  **6230 Obaix (BE)**

(54) **Stretching/blowing conditions in one-stage injection-stretch-blow-moulding**

(57) The present invention discloses a method for preparing containers by one-stage injection-stretch-blow-moulding with a resin comprising:
- a random copolymer of propylene (RCP) having a melt index of from 1.5 to 35 dg/min, an ethylene content of less than 6 wt% with respect to the weight of the RCP; and
- optionally a nucleating and/or a clarifying agent;

wherein the preform injection temperature is larger than 200 °C and
wherein the stretching and blowing temperature Tsb is limited to a very narrow range ΔT of at most 15 °C, said range being a function of the injection temperature Tinj.

EP 1 870 225 A1

**Description**

The present invention relates to the optimal stretching/blowing conditions to be used in the preparation of polypropylene articles by one-stage injection-stretch-blow-moulding (ISBM).

EP-A-151741 to Mitsui discloses single-stage manufacturing of articles by ISBM. These articles are prepared from propylene-ethylene random copolymers having a melt flow index of from 4 to 50 dg/min and containing a nucleating agent. The injection moulding temperature is of from 200 to 260 °C and all examples have been carried out with an injection moulding temperature of 220 °C.

WO95/11791 to Bekum is directed to a two-stage process for preparing articles by ISBM. The preferred resin is an ethylene-propylene copolymer containing more than 50 wt% of propylene and having a melt index of from 10 to 20 dg/min. The injection cavity fill rate is of from 3 to 5 grams per second and the injection temperature is of about 210 °C.

WO05/074428 to Milliken discloses a two-stage process for preparing articles by ISBM. The resin is a polypropylene composition having a melt flow index of from 6 to 50 dg/min, preferably from 13 to 35 dg/min prepared by any method known in the art. The mould fill rate is larger than 5 grams per second and the preform articles have sidewalls having a maximum thickness of less than 3.5 mm. The injection temperatures cited in the examples are of 230 and 240 °C.

WO99/41293 to BASF discloses the use of metallocene-produced homo- or copolymers of propylene in ISBM. The range of melt indexes is broadly defined from 0.1 to 1000 dg/min and the injection temperature is of from 200 to 280 °C. The polydispersity index of metallocene-prepared polypropylene is very narrow.

None of these resins produce articles having an ideal balance of properties.

It is an aim of the present invention to produce good quality polypropylene articles by one-stage injection-stretch-blow-moulding.

It is another aim of the present invention to provide optimal stretching/blowing conditions for producing polypropylene articles by injection-stretch-blow moulding having excellent optical properties after bi-orientation.

It is also an aim of the present invention to produce articles having good thickness distribution.

It is a further aim of the present invention to produce articles having good stacking properties.

It is yet another aim of the present invention to produce articles having excellent drop test, especially at low temperature.

Any one of these aims is fulfilled, at least partially, by the present invention.

Accordingly, the present invention discloses containers prepared by one-stageinjection-stretch-blow-moulding with a resin comprising:

- a random copolymer of propylene (RCP) having a melt index of from 1.5 to 35 dg/min, an ethylene content of less than 6 wt% with respect to the weight of the RCP; and
- optionally a nucleating and/or a clarifying agent;

wherein the injection temperature is larger than 200 °C and
wherein the stretching/blowing temperature is limited to a narrow range AT of less than 15 °C, said range being a function of the injection temperature.

The melt flow index MI2 is measured following the method of standard test ISO 1133 under a load of 2.16 kg and at a temperature of 230 °C.

Preferably the preform injection temperature is of at least 200 °C, preferably 210°C and at most 270 °C.

The stretching/blowing temperature is limited to a very narrow range AT of less than 15 °C, said range being a function of preform injection temperature Tinj. In the range of preform injection temperature of from 200 to 270 °C used in the present invention, the relationship between the stretching/blowing temperature Tsb and the preform injection temperature Tinj can be expressed by

$$Tsb = 105 + 0.27 \times (Tinj - 200)$$

For example, for resins having a melt flow rate of about 10 dg/min and for a preform injection temperature of 210 °C, the preferred stretching/blowing temperature ranges between 100 and 115 °C, and for a preform injection temperature of 260 °C, the preferred stretching/blowing temperature ranges between 117 and 125 °C.

The best mechanical properties are obtained in the stretching/blowing temperature range between 100 and 115 °C, for resins having a melt flow rate in the middle of the range, of about 10 dg/min.

If the melt flow rate decreases, the preform injection temperature increases accordingly. The stretching/blowing temperature also increases, but the range of allowed temperatures remains smaller than 15 °C.

The present invention also comprises the method for preparing the containers.

Preferably, the polypropylene resin used in the present invention is prepared with a Ziegler-Natta (ZN) catalyst system. ZN catalyst systems inherently produce polymers having a broad polydispersity index. The polydispersity index is defined as the ratio Mw/Mn of the weight average molecular weight Mw over the number average molecular weight Mn. For sake of clarity, it is repeated that metallocene and single-site catalysts are not ZN catalysts.

The resin is a random copolymer of propylene. The preferred comonomer is ethylene and the amount of ethylene present in the resin is preferably of at most 4.5 wt%. The preferred minimum is of 1 wt%.

The resin may additionally contain up to 5000 ppm of the nucleating or clarifying agents usually used in the field. Preferably, if present, the nucleating agent is used in an amount of from 200 to 2500 ppm. The nucleating or clarifying agents that can be used in the present invention can be selected from sorbitols, sodium salts, lithium benzoate, sodium benzoate, talc, aluminium salts or combinations thereof.

Other additives typically employed in the field such as for example antioxidants or antistatic may be added.

The melt temperature and the nature of the raw material are the parameters that influence most the properties of the articles prepared by one-stage ISBM.

The injection temperature is preferably increased for low melt index resins in order to avoid excessive stress. Increasing the injection temperature allows to increase the injection rate without increasing the stress. At a given temperature, the shear rate can be expressed as

$$\text{Shear rate} = (32 \times \text{injection speed}) / (3.14159 \times \text{gate diameter}^3)$$

The relation between the melt temperature and the shear rate is not known exactly, but it is generally accepted that the higher the temperature, the lower the shear rate.

At a specified injection temperature, the mould filling rate over gate diameter ratio is of at most 10 cc/s/mm, preferably of at most 6 cc/s/mm. Preferably, it is of at least 3 cc/s/mm. The gate diameters that are typically used in the field are of from 2 to 4 mm, preferably this invention uses gate diameters of from 2.8 to 4 mm.

The injection-stretch-blow-moulding can be carried out either in a two-stage process carried out on two separate machines (cold cycle), or in a single-stage process carried out on a single machine (hot cycle). In the present invention, the one-stage process is used: all steps are carried out in the same machine.

Injection stretch blow moulding comprises the steps of:

- providing a pre-form by injection moulding on a multi-cavity mould;
- optionally slightly re-heating the pre-form in a reflective radiant heat oven or in front of an adequate source of heat, like an air knife, following a pre-determined temperature profile for the pre-form;
- optionally, passing the heated pre-form through an equilibrium zone to allow the heat to disperse evenly through the pre-form wall;
- optionally, submitting the preform to a pre-blow step;
- stretching the pre-form axially by a centre rod;
- orienting the stretched pre-form radially by high pressure air.

In this process, the stretching step is critical: it requires homogeneous heating of the pre-form and thus optimisation of the pre-form.

The pre-blow pressure is generally of from 4 to 10 bars, preferably of from 6 to 8 bars. The stretching is then typically carried out under a blowing pressure of from 5 to 40 bars, preferably of from 8 to 30 bars, according to preform wall thickness. The stretch rod speed is of from 1000 to 2000 mm/s, preferably of from 1400 to 1800 mm/s and most preferably of about 1600 mm/s. The stretch rod diameter depends upon the size of the preform. The best results for material distribution in the finished article are obtained when the rod diameter is about 2/3 of that of the preform. For example, for a preform having a diameter of 25 mm, the preferred rod diameter is of about 16 mm.

The articles prepared with the preforms of the present invention have remarkable optical properties: they have an excellent transparency throughout their whole body or at least throughout most of their body. In addition they have good wall thickness distribution, excellent drop test and very good top load and stacking properties. They also have a number of desirable properties such as for example low water vapour permeability, good squeezability, and excellent heat resistance allowing for example hot filling, microwave heating or sterilisation.

The properties of the ISBM containers are illustrated by the following examples that are not intended to limit the scope of the invention.

**Examples.**

A random copolymer of propylene prepared with a Ziegler-Natta catalyst system has been tested. It had the following properties:

C2 = 2.8 wt%
M12 = 10 dg/min
Tm = 146°C
Tc start = 132.3 °C
Tc peak = 117.3 °C

Wherein Tm and Tc represent respectively the melting and crystallisation temperatures.

A first resin was used without nucleating or clarifying agents (S03), a second resin was used with 2000 ppm of dibenzylidene sorbitol (DBS) as clarifying agent (S01) and a third resin was used with 250 ppm of Na11 as nucleating agent (S02).

800 mL coffee jars were prepared: their weight was of 33 g. The processing parameters were as follows.

Injection parameters.

Gate size = 4 mm
Injection time = 2.15 s
Injection speed = 15.4 g/s
Mould temperature = 15 °C

Stretching/blowing parameters.

Mould temperature = 15 °C
Preblow delay = 0.2 s (0 time represents the moment when the rod enters the preform)
Preblow pressure = 8 bars
Preblow airflow = maximum opening
Preblow duration = 0.4 s
Blow start = 0.6 s (preblow delay + preblow duration)
Blow pressure = 38 bars
Blow duration = 3.4 s
Decompression time = 0.6 s (after blow duration, before mould opening, for security reasons).

**List of figures.**

Figure 1 represents the haze expressed in % as a function of stretching / blowing temperature expressed in °C for the three resins S01 to S03.

Figure 2 represents the top load expressed in Newtons 72 hours after the blowing step, as a function of stretching / blowing temperature expressed in °C for the three resins S01 to S03.

Figure 3 represents the drop test results expressed in metres, as a function of stretching / blowing temperature expressed in °C, for the three resins S01 to S03 and at a drop temperature of 5 °C.

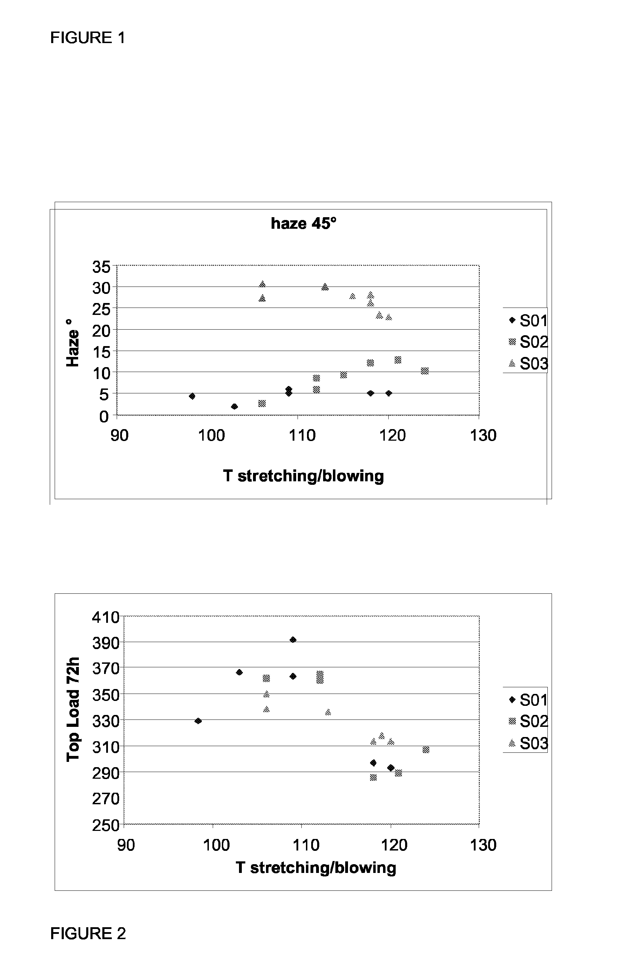

Haze was measured at mid-height of the jars, in the middle of the labelling zone at a height of about 56 mm, and on four points around the diameter, respectively at 45, 135, 225 and 315 °, following the method of ISO 14782. The haze values reported in figure 1 and are the average of these 4 measures. As expected, resins containing nucleating agent have a much lower haze than non-additivated resins. It can also be seen that increasing stretching / blowing temperature has a negative influence on haze.

Top load tests were carried out on an AC-002 from Top Wave International Inc. under the following conditions:

Program 'Heatset', Mode B
Distance = 10 mm
Speed = 5 mm/s.
Top load measurements were carried out on empty jars 72 hours after blowing.
The results are presented in figure 2.

After 72 hours, jars prepared with resin S01, additivated with DBS, had slightly better top load results than those prepared with resins S03, not additivated and with S02, additivated with Na11. The differences were especially marked at low stretching / blowing temperature. The jars prepared with non-additivated resin S03 were the least resistant in top load.

The influence of stretching / blowing temperature on top load was very marked for additivated resins S01 and S02: the higher the stretching / blowing temperature, the lower the top load. Differences up to 20% are observed.

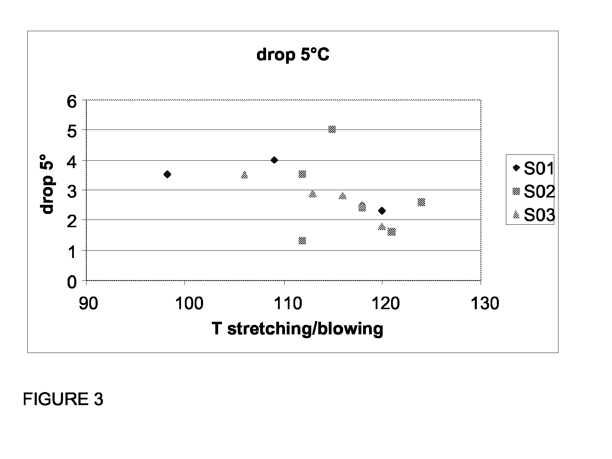

The drop impact resistance was measured on jars filled with water. Prior to the test, the jars were conditioned during 24 hours at the test temperature. They were dropped vertically on a metal plate with a slope of 15°. The results are displayed in figure 3.

Drop test results were influenced by additivation, especially at low stretching / blowing temperature: the drop test resistance of nucleated resins was higher than that of non-nucleated ones.

A strong influence of the stretching / blowing temperature on the resistance in the drop test was observed, for all three resins.

**Claims**

1.   A method for preparing containers by one-stage injection-stretch-blow-moulding with a resin comprising:

- a random copolymer of propylene (RCP) having a melt index of from 1.5 to 35 dg/min, an ethylene content of less than 6 wt% with respect to the weight of the RCP; and
- optionally a nucleating and/or a clarifying agent;

wherein the preform injection temperature is larger than 200 °C and
wherein the stretching and blowing temperature $T_{sb}$ is limited to a very narrow range ΔT of at most 15 °C, said range being a function of the injection temperature $T_{inj}$.

2.   The method of claim 1 wherein, within a range of preform injection temperature of from 200 to 270 °C, the stretching/ blowing temperature $T_{sb}$ is expressed in terms of preform injection temperature $T_{inj}$ as $T_{sb} = 105 + 0.27 \times (T_{inj} - 200)$.

3.   The method of claim 1 or claim 2 wherein the ethylene content is of at most 4.5 wt%.

4.   The method of any one of the preceding claims wherein the melt index is of at most 15 dg/min.

5.   The method of claim 1 or claim 4 wherein the preform injection temperature is of about 210 °C and the stretching/ blowing step is of from 100 to 115 °C.

6.   The method of one-stage injection-stretch-blow-moulding of any one of claims 1 to 5 that comprises the steps of:

- providing a pre-form by injection moulding on a multi-cavity mould;
- optionally slightly re-heating the pre-form in a reflective radiant heat oven or in front of an adequate source of heat following a pre-determined temperature profile adapted to the pre-form;
- optionally, passing the heated pre-form through an equilibration zone to allow the heat to disperse evenly through the pre-form wall;
- optionally, submitting the preform to a pre-blow step;
- stretching the pre-form axially by a centre rod;
- orienting the stretched pre-form radially by high pressure air.

7.   Containers obtainable by the method of any one of claims 1 to 6.

8. Use of a random copolymer of propylene having a melt index of from 1.5 to 35 dg/min, an ethylene content of less than 6 wt% with respect to the weight of the RCP and optionally a nucleating and/or a clarifying agent to prepare containers having high resistance to drop and high top load properties by one-stage injection-stretch-blow-moulding.

FIGURE 1

FIGURE 2

FIGURE 3

**European Patent Office**

**EUROPEAN SEARCH REPORT**

Application Number

EP 06 11 5771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 764 514 A1 (MONTELL NORTH AMERICA INC [US] BASELL NORTH AMERICA INC [US]) 26 March 1997 (1997-03-26) | 8 | INV.<br>B29C49/00 |
| Y | * page 2, line 27 - page 3, line 9 *<br>* page 4; claims *<br>----- | 1,3-8 | |
| Y | EP 0 251 340 A2 (MITSUI TOATSU CHEMICALS [JP]) 7 January 1988 (1988-01-07)<br>* page 1, line 28 - page 6, line 51 *<br>----- | 1,3-7 | |
| X | EP 0 012 481 A (HUELS CHEMISCHE WERKE AG [DE]) 25 June 1980 (1980-06-25) | 8 | |
| Y | * page 2, line 14 - page 4, line 8 *<br>----- | 1,3-8 | |
| Y | WO 95/11791 A2 (BEKUM MASCHF GMBH [DE]) 4 May 1995 (1995-05-04)<br>* page 2, line 15 - page 4, line 24; claims 15-21; figures *<br>----- | 1,3-8 | |
| Y | WO 2005/118407 A (MILLIKEN & CO [US]; XU JIANNONG [US]; VEERMEERSCH BERNARD [BE]; LAMBER) 15 December 2005 (2005-12-15)<br>* page 1, line 25 - line 34 *<br>* page 6, line 10 - line 32 *<br>----- | 1,3-8 | TECHNICAL FIELDS SEARCHED (IPC)<br><br>B29C |
| Y | DE 198 05 329 A1 (BASF AG [DE]) 12 August 1999 (1999-08-12)<br>* page 2, line 39 - line 50 *<br>----- | 1,3-8 | |
| Y | JP 60 149427 A (MITSUI TOATSU CHEMICALS) 6 August 1985 (1985-08-06)<br>* abstract *<br>----- | 1,3-8 | |
| A | EP 0 309 138 A2 (EXXON CHEMICAL PATENTS INC [US]) 29 March 1989 (1989-03-29)<br>* claims *<br>----- | 1-8 | |

The present search report has been drawn up for all claims

| Place of search | Date of completion of the search | Examiner |
|---|---|---|
| Munich | 3 November 2006 | Kopp, Christian |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**                    EP 06 11 5771

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2006

| Patent document cited in search report | | Publication date | Patent family member(s) | | Publication date |
|---|---|---|---|---|---|
| EP 0764514 | A1 | 26-03-1997 | AU | 701662 B2 | 04-02-1999 |
| | | | AU | 6551196 A | 20-03-1997 |
| | | | BR | 9603756 A | 02-06-1998 |
| | | | CA | 2185475 A1 | 16-03-1997 |
| | | | CN | 1159975 A | 24-09-1997 |
| | | | DE | 69619324 D1 | 28-03-2002 |
| | | | DE | 69619324 T2 | 29-08-2002 |
| | | | IT | MI951931 A1 | 17-03-1997 |
| | | | JP | 9220757 A | 26-08-1997 |
| | | | NO | 963847 A | 17-03-1997 |
| | | | ZA | 9607450 A | 10-03-1997 |
| EP 0251340 | A2 | 07-01-1988 | NONE | | |
| EP 0012481 | A | 25-06-1980 | AT | 370031 B | 25-02-1983 |
| | | | AT | 786979 A | 15-07-1982 |
| | | | DE | 2854388 A1 | 03-07-1980 |
| WO 9511791 | A2 | 04-05-1995 | AU | 7992094 A | 22-05-1995 |
| | | | CA | 2174421 A1 | 04-05-1995 |
| | | | EP | 0725722 A1 | 14-08-1996 |
| WO 2005118407 | A | 15-12-2005 | NONE | | |
| DE 19805329 | A1 | 12-08-1999 | WO | 9941293 A1 | 19-08-1999 |
| | | | EP | 1053265 A1 | 22-11-2000 |
| | | | JP | 2002503735 T | 05-02-2002 |
| | | | US | 6733717 B1 | 11-05-2004 |
| JP 60149427 | A | 06-08-1985 | JP | 1734220 C | 17-02-1993 |
| | | | JP | 4023620 B | 22-04-1992 |
| EP 0309138 | A2 | 29-03-1989 | AU | 2239088 A | 23-03-1989 |
| | | | JP | 1154723 A | 16-06-1989 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 151741 A, Mitsui
- WO 9511791 A, Bekum
- WO 05074428 A, Milliken
- WO 9941293 A, BASF